# EUROPÄISCHE PATENTANMELDUNG

(11) **EP 3 050 735 A1**
(43) Veröffentlichungstag der Anmeldung: **03.08.2016**
(21) Anmeldenummer: 15153035.9
(22) Anmeldetag: 29.01.2015
(51) Int. Cl.: B60K 15/03

(54) **Anschlussvorrichtung für einen Kraftstofftank**

(71) Anmelder: Magna Steyr Fuel Systems GesmbH, 8261 Sinabelkirchen (AT)
(72) Erfinder: Kahler, Bernd, 8010 Graz (AT)
(74) Vertreter: Zangger, Bernd

(57) **Zusammenfassung**

Eine Anschlussvorrichtung für einen Kraftstofftank, wobei die Anschlussvorrichtung einen Aufschweißnippel (1) und eine mit dem Aufschweißnippel (1) fluidverbundene Leitung (2) umfasst, wobei der Aufschweißnippel (1) und die Leitung (2) aus Kunststoff bestehen, wobei der Aufschweißnippel (1) eine in den Kunststoff eingebettete innere Sperrschicht (3) für Kohlenwasserstoffe aufweist, wobei sich die Sperrschicht (3) entlang des Aufschweißnippels (1) erstreckt und ein Verfahren zur Herstellung einer solchen Anschlussvorrichtung.

## Beschreibung

### Gebiet der Erfindung

Die vorliegende Erfindung betrifft eine Anschlussvorrichtung für einen Kraftstofftank und ein Verfahren zur Herstellung der Anschlussvorrichtung.

### Stand der Technik

Kraftstofftanks weisen in der Regel zumindest eine Öffnung auf, die für den Anschluss weiterer Bauteile, wie insbesondere Leitungen, beispielsweise für den Anschluss eines Einfüllrohres oder eines Verbindungsrohres zu einer Brennkraftmaschine geeignet sind.

Für den Anschluss von Leitungen an einen Kraftstofftank ist es bekannt, als Zwischenelement zwischen dem Kraftstofftank und der Leitung, einen Aufschweißnippel zu verwenden, der an einem Ende auf den Kraftstofftank geschweißt wird und an seinem anderen Ende zur Verbindung mit einer Leitung ausgebildet ist.

Kraftstofftanks werden bekannterweise zunehmend aus Kunststoff ausgebildet, insbesondere aus High Density Polyethylene (HDPE). Auch für Aufschweißnippel ist die Verwendung von HDPE bekannt, da ein Aufschweißnippel aus HDPE einfach und zuverlässig auf einen HDPE Tank geschweißt werden kann.

Solche Aufschweißnippel werden üblicherweise im Spritzgussverfahren hergestellt.

Aufschweißnippel können auch aus mehreren Komponenten aufgebaut sein, um das Aufschweißen auf einen Kraftstofftank zu erleichtern, wie es aus der DE 195 35 413 C1 bekannt ist.

Weiters ist bekannt Kraftstofftanks aus Kunststoff mit einer Sperrschicht für Kohlenwasserstoffe auszustatten, insbesondere mit einer Ethylen-Vinylalkohol-Copolymer (EVOH) Schicht, um die umweltschädliche Diffusion dieser Verbindungen in die Umgebung des Kraftstofftanks zu verringern.

### Zusammenfassung der Erfindung

Es ist eine Aufgabe der Erfindung, eine Anschlussvorrichtung für einen Kraftstofftank anzugeben, die eine Reduktion von umweltschädlichen Emissionen ermöglicht und ein einfaches Herstellungsverfahren dafür anzugeben.

Die Lösung der Aufgabe erfolgt durch eine Anschlussvorrichtung für einen Kraftstofftank, wobei die Anschlussvorrichtung einen Aufschweißnippel und eine mit dem Aufschweißnippel fluidverbundene Leitung umfasst, wobei der Aufschweißnippel und die Leitung aus Kunststoff bestehen, wobei der Aufschweißnippel eine in den Kunststoff eingebettete innere Sperrschicht für Kohlenwasserstoffe aufweist, wobei sich die Sperrschicht entlang des Aufschweißnippels erstreckt.

Erfindungsgemäß ist daher vorgesehen einen Aufschweißnippel mit einer Sperrschicht auszustatten, so dass nicht nur am Kraftstoffbehälter selbst eine Diffusion der Kohlenwasserstoffe verringert wird, sondern auch im daran anschließenden Aufschweißnippel. Dazu wird in den Aufschweißnippel eine Sperrschicht eingebettet, die entlang der Länge des Aufschweißnippels verläuft.

Weiterbildungen der Erfindung sind in den abhängigen Ansprüchen, der Beschreibung sowie den beigefügten Zeichnungen angegeben.

Bevorzugt erstreckt sich die Sperrschicht entlang der gesamten Länge des Aufschweißnippels.

Vorzugsweise erstreckt sich die Sperrschicht auch entlang der Leitung, so dass nicht nur am Aufschweißnippel sondern auch an der daran anschließenden Leitung eine Sperrschicht ausgeführt ist.

Bevorzugt erstreckt sich die Sperrschicht entlang der gesamten Länge der Leitung.

Die Leitung weist bevorzugt eine Länge von mindestens 10 cm auf.

Besonders bevorzugt ist der Aufschweißnippel einstückig mit der Leitung ausgebildet. Aufschweißnippel und Leitung bilden also zusammen ein einziges Bauteil.

Die Sperrschicht erstreckt sich vorzugsweise kontinuierlich durch den Aufschweißnippel und die Leitung, insbesondere von der Anschlussfläche des Aufschweißnippels bis zum Ende der Leitung, also über die gesamte Länge von Aufschweißnippel und Leitung.

Der Aufschweißnippels und die Leitung sind bevorzugt aus High-Density Polyethylene (HDPE) ausgebildet.

Bevorzugt ist die Sperrschicht eine Ethylen-Vinylalkohol-Copolymer (EVOH) Schicht.

Der Aufschweißnippel weist bevorzugt eine Austulpung im Aufschweißbereich auf, so dass ein einfaches Schweißen auf den Kraftstoffbehälter ermöglicht wird. Das Schweißen kann beispielsweise mittels Spiegelschweißen oder mittels Reibschweißen erfolgen.

Der Aufschweißnippel kann ein Abdichtprofil in einem Verbindungsbereich mit der Leitung aufweisen. In einer mit der Leitung einstückigen Ausführungsform ist ein solches Abdichtprofil normalerweise nicht erforderlich. Das Abdichtprofil kann insbesondere ein Tannenbaumprofil sein.

Bevorzugt sind der Aufschweißnippel und die Leitung durch Extrusion oder Blasformen hergestellt.

Ein Verfahren zur Herstellung einer erfindungsgemäßen Anschlussvorrichtung umfasst dass der Aufschweißnippel, bevorzugt mit der Sperrschicht, extrudiert oder blasgeformt wird.

Besonders bevorzugt wird der Aufschweißnippel und die Leitung mit der Sperrschicht im selben Fertigungsprozess einstückig extrudiert oder blasgeformt.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines Aufschweißnippels einer erfindungsgemäßen Anschlussvorrichtung.
- Fig. 2: ist eine Schnittansicht einer erfindungsgemäßen Anschlussvorrichtung mit einem Aufschweißnippel und damit einstückiger Leitung.

### Detaillierte Beschreibung der Erfindung

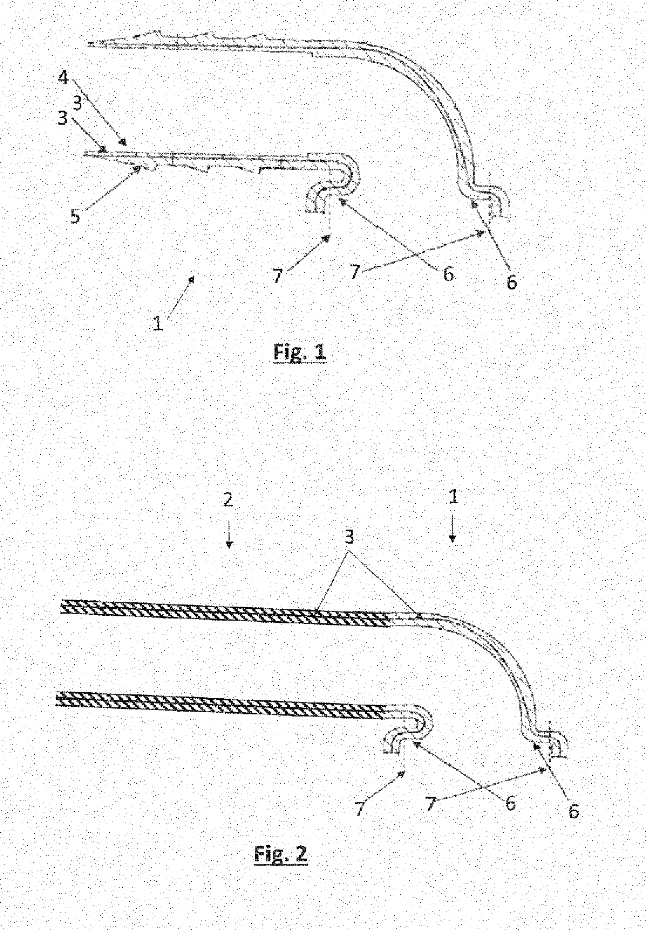

In Fig. 1 ist eine Schnittansicht eines Aufschweißnippels 1 einer erfindungsgemäßen Anschlussvorrichtung dargestellt. Der Aufschweißnippel besteht aus HDPE und weist eine in den Kunststoff eingebettete innere Sperrschicht 3 für Kohlenwasserstoffe auf, die sich entlang des Aufschweißnippels 1 erstreckt. Innerhalb der Sperrschicht 3 weist der Aufschweißnippel eine innere HDPE Schicht 4 auf, außerhalb der Sperrschicht 3 eine äußere HDPE Schicht 5.

An einem ersten Ende weist der Aufschweißnippel 1 eine als Schweißfläche 6 ausgebildete Anschlussfläche auf, die der Verschweißung mit einem Kraftstoffbehälter dient. Der Aufschweißnippel ist extrudiert oder blasgeformt und wird daher nach dem Extrudieren oder Blasformen an einer Schnittkante 7 abgeschnitten.

An einem dem ersten Ende gegenüberliegenden zweiten Ende weist der Anschlussnippel 1 ein Tannenbaumprofil als Abdichtprofil auf, um eine dichte Verbindung zu einer hier nicht dargestellten Leitung 2 zu ermöglichen.

In der Fig. 2 ist eine erfindungsgemäße Anschlussvorrichtung dargestellt mit einem Aufschweißnippel 1 und einer damit einstückigen Leitung 2.

Aufschweißnippel 1 und Leitung 2 bilden zusammen ein einziges Bauteil. Das einstückige Bauteil hat somit die Form eines Rohres mit einer Austulpung an dem Ende, das mit einem Kraftstoffbehälter verschweißt wird. Eine Sperrschicht 3 erstreckt sich mittig zwischen inneren und äußeren HDPE Schichten kontinuierlich von der Schweißfläche 6 durch die gesamte Leitung 2.

### Bezugszeichenliste

- 1: Aufschweißnippel
- 2: Leitung
- 3: Sperrschicht
- 4: innere HDPE Schicht
- 5: äußere HDPE Schicht
- 6: Schweißfläche
- 7: Schnittkante

## Patentansprüche

1. Anschlussvorrichtung für einen Kraftstofftank, wobei die Anschlussvorrichtung einen Aufschweißnippel (1) und eine mit dem Aufschweißnippel (1) fluidverbundene Leitung (2) umfasst, wobei der Aufschweißnippel (1) und die Leitung (2) aus Kunststoff bestehen,
**dadurch gekennzeichnet, dass** der Aufschweißnippel (1) eine in den Kunststoff eingebettete innere Sperrschicht (3) für Kohlenwasserstoffe aufweist, wobei sich die Sperrschicht (3) entlang des Aufschweißnippels (1) erstreckt.

2. Anschlussvorrichtung nach Anspruch 1,
**dadurch gekennzeichnet, dass** sich die Sperrschicht (3) entlang der gesamten Länge des Aufschweißnippels (1) erstreckt.

3. Anschlussvorrichtung nach zumindest einem der vorhergehenden Ansprüche,
**dadurch gekennzeichnet, dass** sich die Sperrschicht (3) auch entlang der Leitung (2) erstreckt.

4. Anschlussvorrichtung nach zumindest einem der vorhergehenden Ansprüche,
**dadurch gekennzeichnet, dass** sich die Sperrschicht (3) entlang der gesamten Länge der Leitung (2) erstreckt.

5. Anschlussvorrichtung nach zumindest einem der vorhergehenden Ansprüche,
**dadurch gekennzeichnet, dass** der Aufschweißnippel (1) einstückig mit der Leitung (2) ausgebildet ist.

6. Anschlussvorrichtung nach zumindest einem der vorhergehenden Ansprüche,
**dadurch gekennzeichnet, dass** sich die Sperrschicht (3) kontinuierlich durch den Aufschweißnippel (1) und die Leitung (2) erstreckt, insbesondere von einer Anschlussfläche (6) des Aufschweißnippels (1) bis zum Ende der Leitung (2).

7. Anschlussvorrichtung nach zumindest einem der vorhergehenden Ansprüche,
**dadurch gekennzeichnet, dass** der Kunststoff des Aufschweißnippels (1) und/oder der Leitung (2) High-Density Polyethylen ist.

8. Anschlussvorrichtung nach zumindest einem der vorhergehenden Ansprüche,
**dadurch gekennzeichnet, dass** die Sperrschicht (3) eine Ethylen-Vinylalkohol-Copolymer Schicht ist.

9. Anschlussvorrichtung nach zumindest einem der vorhergehenden Ansprüche,
**dadurch gekennzeichnet, dass** der Aufschweißnippel (1) eine Austulpung im Aufschweißbereich aufweist.

10. Anschlussvorrichtung nach zumindest einem der vorhergehenden Ansprüche,
**dadurch gekennzeichnet, dass** der Aufschweißnippel (1) ein Abdichtprofil in einem Verbindungsbereich mit der Leitung (2) aufweist, insbesondere ein Tannenbaumprofil.

11. Anschlussvorrichtung nach zumindest einem der vorhergehenden Ansprüche,
**dadurch gekennzeichnet, dass** der Aufschweißnippel (1) und die Leitung (2) durch Extrusion oder Blasformen hergestellt sind.

12. Verfahren zur Herstellung einer Anschlussvorrichtung nach zumindest einem der vorhergehenden Ansprüche,
**dadurch gekennzeichnet, dass** der Aufschweißnippel (1) mit der Sperrschicht (3) extrudiert oder blasgeformt wird.

13. Verfahren zur Herstellung einer Anschlussvorrichtung nach zumindest einem der vorhergehenden Ansprüche,
**dadurch gekennzeichnet, dass** der Aufschweißnippel (1) und die Leitung (2) mit der Sperrschicht (3) im selben Fertigungsprozess einstückig extrudiert oder blasgeformt werden.
